# EUROPEAN PATENT APPLICATION

(11) **EP 3 771 692 A1**
(43) Date of publication of application: **03.02.2021**
(21) Application number: 19188852.8
(22) Date of filing: 29.07.2019
(51) Int. Cl.: C02F 1/42, C02F 1/66

(54) **WATER-HARDNESS REDUCING APPARTUS FOR REDUCING THE FORMATION OF CHALK DEPOSITS IN A WATER SUPPLY**

(71) Applicant: ICon GmbH & Co. KG, 75181 Pforzheim (DE)
(72) Inventor: Bissen, Monique, 75175 Pforzheim (DE)
(74) Representative: Wittmann, Günther

(57) **Abstract**

The present invention is directed to a water-hardness reducing apparatus (100) for reducing the formation of chalk deposits in a water supply (101) adapted to be coupled with a beverage generating apparatus (103), comprising, a cation exchange element (107), which is in fluidic connection with a water source (105) of the water supply (101) for supplying water, wherein the cation exchange element (107) is adapted to remove cations from the supplied water to obtain cation reduced water, a first pH sensor (109), which is positioned downstream of the cation exchange element (107), wherein the first pH sensor (109) is adapted to asses a first pH value of the cation reduced water, a lye supplying element (113), which is positioned downstream of the cation exchange element (107), wherein the lye supplying element (113) is adapted to supply lye to the cation reduced water, and a controller (111), which is connected to the first pH sensor (109) and to the lye supplying element (113), wherein the controller (111) is configured to activate the lye supplying element (113) for supplying lye to the cation reduced water, depending on the assessed first pH value of the cation reduced water.

## Description

### Background of the Invention

### Field of the invention

The invention relates to a water-hardness reducing apparatus for reducing the formation of chalk deposits in a water supply, in particular in a water supply adapted to be coupled with a beverage generating apparatus for generating beverages. The invention also relates to a method for reducing the formation of chalk deposits in such water supply.

### Description of the related art

A commonly used beverage generating apparatus, in particular hot beverage generating apparatus, such as a coffee brewing apparatus or a tea brewing apparatus, is typically connected to a water supply, in particular a tap water supply or a tank, for supplying water, in particular tap water, to the beverage generating apparatus.

Depending on regional variations, the tap water may contain high alkalinity and high concentrations calcium and magnesium ions (water hardness), which could lead to the formation of chalk deposits in the water supply and/or beverage generating apparatus during operation of the beverage generating apparatus. Such chalk deposits are considered harmful since said deposits may impair function of the beverage generating apparatus and may also reduce the quality of the beverage generated by the beverage generating apparatus.

To prevent the formation of chalk deposits in general water supplies typically strong acidic cation exchangers are used, which are adapted to remove cations, in particular calcium ions and magnesium ions, from water, thereby obtaining cation reduced water after the cation exchange process. Such strong acidic cation exchangers typically include sulfonic acid containing resins.

Such strong acidic cation exchangers are typically used in a buffered state, wherein a part of the protons bound to the cation exchange resin have been replaced by alkaline ions, such as sodium ions and/or potassium ions. However, due to the limited binding capacity of cations of such buffered cation exchange resins, when removing high concentrations of cations, commonly used strong acidic cation exchangers are saturated with cations within a comparably short time span.

Such saturated strong acidic cation exchangers have to be regularly regenerated at their site of operation, typically with a solution of sodium chloride, resulting in increased efforts, costs and also in an increased size of such cation exchangers. Because of this, commonly used beverage generating apparatuses, such as coffee brewing apparatuses and/or tea brewing apparatuses, typically do not include strong acidic cation exchangers.

To prevent the formation of chalk deposits in beverage generating apparatuses also weak acidic cation exchangers are used, which are mostly used in a non-buffered state and have an increased cation binding capacity and therefore do not have to be regenerated as often as strong acidic cation exchangers. Such weak acidic cation exchangers typically include carboxylic acid containing resins.

Such commonly used cation exchangers may include cation exchange resins in a non-buffered state, wherein upon calcium and/or magnesium binding, the non-buffered cation exchange resin releases protons in exchange for the bound calcium and/or magnesium ions.

Due to the release of protons to the water during the cation exchange process by commonly used cation exchangers, the formation of carbonic acid is increased, which results in a decreased pH of the cation reduced water after cation exchange. Depending on the amount and type of cation exchange resin to be used, the pH of the cation reduced water may drop to a pH of 4.3 after the cation exchange process.

To prevent such drastic drop in the pH value, commonly used cation exchangers may include cation exchange resins in a buffered state, wherein the protons bound by the cation exchange resin have been replaced by alkaline ions, such as sodium and/or potassium ions. Upon calcium and/or magnesium ion binding, the buffered cation exchange resin releases alkaline ions, such as sodium and/or potassium ions, in exchange for the bound calcium and/or magnesium ions.

Due to the release of alkaline ions, such as sodium and/or potassium, instead of carbonic acid, alkaline bicarbonates, such as sodium bicarbonate and/or potassium bicarbonate, are formed in the cation reduced water after cation exchange, resulting in a less significant drop of pH of the cation reduced water.

However, an important disadvantage of commonly used buffered cation exchange resins is their limited binding capacity compared to non-buffered cation exchange resins. Therefore, typically used buffered cation exchange resins are often used in combination with non-buffered cation exchange resins to allow for a compromise between maximizing binding capacity of the cation exchange resin and minimizing the resulting drop in pH of the cation reduced water after cation exchange.

Moreover, in such commonly used cation exchangers typically a portion of water supplied to the cation exchanger bypasses the cation exchanger and is further downstream combined with the cation reduced water obtained after the cation exchange process, to allow for a minimal concentration of cations, in particular calcium and/or magnesium ions, in the resulting cation reduced water. Such minimal concentrations of calcium and/or magnesium ions in the cation reduced water function as flavor carriers for several ingredients of a lot of beverages, in particular coffee aromas and/or tea aromas.

Therefore, commonly used prior art cation exchangers allow for reduced amounts of cations, in particular calcium and/or magnesium, in the cation reduced water, thereby reducing chalk formation in the supply and/or within beverage generating apparatuses connected to such water supply.

Nevertheless, such commonly used prior art cation exchangers do no completely solve the problem of a significant drop in pH value of the cation reduced water downstream of the cation exchanger. Consequently, the pH value of the cation reduced water supplied to a beverage generating apparatus is typically not in the optimal range for providing a beverage with optimal qualities. This is in particular problematic, since the pH value drop in the cation reduced water depends on the saturation level of the cation exchange resin used during the cation exchange. Therefore, the binding rate of cations to the cation exchange resin is typically not constant during operation of the cation exchanger, but is reduced with increased saturation of the cation exchange resin. Thus, the resulting pH value drop in the cation reduced water during the operation of the cation exchanger does vary during operation of the cation exchange element.

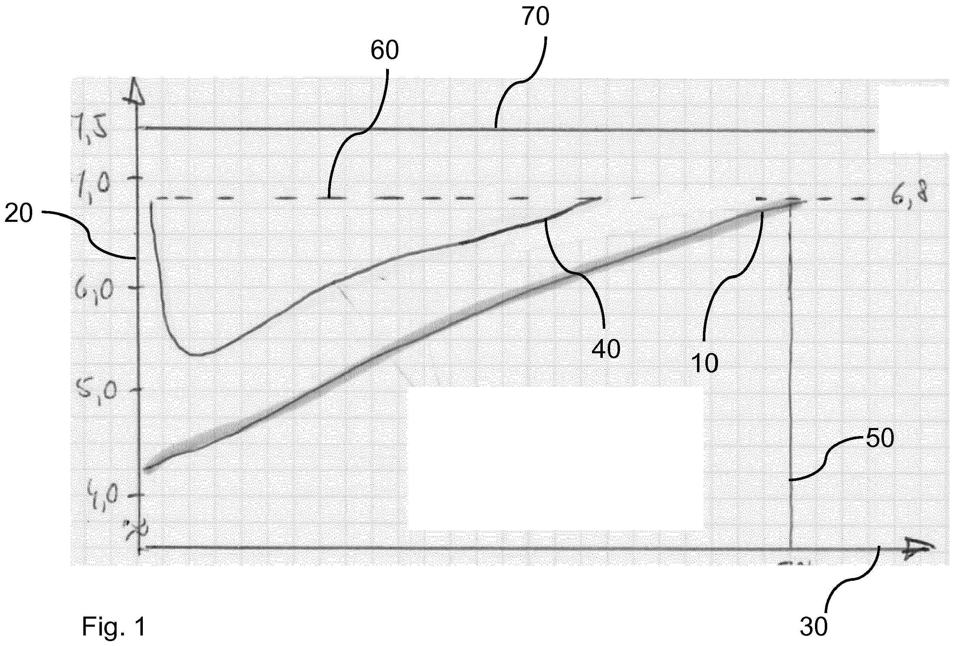

For a more detailed explanation, the pH value of the cation reduced water after cation exchange is depicted in Fig. 1 of the present application.

Consequently, typical beverage generating apparatuses, such as coffee brewing apparatuses and/or tea brewing apparatuses, have to cope with cation reduced water comprising a varying pH during their operation. For example, this varying pH value of the cation reduced water in turn results in varying extraction conditions during coffee and/or tea brewing. Consequently, even when using excellent coffee beans and/or tea leaves, the user of commonly used beverage generating apparatuses, such as coffee brewing apparatuses and/or tea brewing apparatuses, may experience a varying quality of the beverage obtained by the beverage generating apparatus, which is depending on the pH value of the cation reduced water.

It is therefore an object of the present invention to provide an apparatus and a method for preventing the formation of chalk deposits in a water supply adapted to be coupled with a beverage generating apparatus, wherein a constant pH value of the cation reduced water after cation exchange can be maintained during operation of the beverage generating apparatus.

### Summary of the invention

The object of the present invention is solved by a water-hardness reducing apparatus according to claim 1 and a method according to claim 15. The dependent claims claim preferred embodiments.

According to a first aspect, the present invention discloses a water-hardness reducing apparatus for reducing the formation of chalk deposits in a water supply adapted to be coupled with a beverage generating apparatus, comprising, a cation exchange element, which is in fluidic connection (communication) with a water source, wherein the cation exchange element is adapted to remove cations from the supplied water to obtain cation reduced water and alkalinity reduced water. The water-hardness reducing apparatus further comprises a first pH sensor, which is positioned downstream of the cation exchange element, wherein the first pH sensor is adapted to asses a first pH value of the cation reduced water. The water-hardness reducing apparatus further comprises a lye supplying element, which is positioned downstream of the cation exchange element, wherein the lye supplying element is adapted to supply lye to the cation reduced water, and a controller, which is connected to the first pH sensor and to the lye supplying element, wherein the controller is configured to activate the lye supplying element for supplying lye to the cation reduced water, depending on the assessed first pH value of the cation reduced water. The water source may be an inlet of a water supply for supplying water, i.e. tap water, a tank filled with water, a tank filled with tap water or the like.

The apparatus is adapted to reduce the formation of chalk deposits in a water supply, adapted to be coupled to a beverage generating apparatus. In particular, the apparatus is a water-hardness reducing apparatus. Said water-hardness reducing apparatus is adapted to reduce the water-hardness of the water conveyed through the water supply, in particular by reducing the concentrations of alkaline earth cations, in particular magnesium ions and/or calcium ions, in the water. Since the formation of chalk deposits in the water supply is dependent on the concentration of said cations, in particular calcium, reducing the concentrations of said cations, the formation of chalk deposits in the water supply can be also reduced. Thereby, the maintenance effort to clean the water supply and/or the beverage generating apparatus can also be significantly reduced.

The cation exchange element is adapted to constantly remove cations, in particular alkaline earth cations, in particular magnesium ions and/or calcium ions, from the water conveyed through the water supply to obtain cation reduced water, which comprises a reduced concentration of said cations. By reducing the concentrations of cations, in particular calcium ions, in the water, the amount of calcium carbonate, e.g. chalk, precipitations in the water supply and in the beverage generating apparatus, which is coupled to the water supply, can be significantly reduced.

In particular, the cation exchange element comprises at least one of the following cation exchange resins, a strong acidic cation exchange resin, in particular a sulfonic acid-based resin, and a weak acidic cation exchange resin, in particular carboxylic acid-based resin. Strong acidic cation exchange resins in particular have a pKs of less than 5 and can be used in a non-buffered of buffered state. Weak acidic cation exchange resins in particular have a pKs of more than 5 and can be used in a non-buffered of buffered state. Said weak acidic cation exchange resins can be in particular used in a non-buffered state, wherein an increased binding capacity of the weak acidic cation exchange resin could be maintained, thereby reducing the time intervals between replacement or regeneration of the weak acidic cation exchange resins.

The first pH sensor may comprise at least one pH electrode, in particular a proton-selective electrode, in particular a glass or ceramic electrode (cation sensitive electrode). The first pH sensor is adapted to constantly asses pH values of the cation reduced water conveyed through the water supply after exiting the cation exchange element. In particular, the first pH sensor is adapted to assess a pH drop of the cation reduced water after cation exchange, wherein the pH drop is caused by the release of an excess of protons from the cation exchange resin.

The lye supplying element is adapted to supply lye, in particular sodium hydroxide lye and/or potassium hydroxide lye, to the cation reduced water conveyed through the water supply. In particular, the lye can be inserted into the lye supplying element as a liquid or the lye can be inserted into the lye supplying element in solid form, i.e. sodium hydroxide and/or potassium hydroxide pellets, which are then dissolved in water within the lye supplying element, to obtain a liquid lye to be supplied to the cation reduced water. By adding the lye to the cation reduced water, the pH value of the cation reduced water can be raised to the desired value, in particular to counterbalance a pH value drop in the cation reduced water after cation exchange.

In particular, the lye supplying element comprises a lye container for storing the lye, in particular sodium hydroxide lye and/or potassium hydroxide lye, and a pump, in particular a micro-dosing pump, for supplying the lye stored in the container to the cation reduced water.

The control element is configured to activate the lye supplying element for supplying lye to the cation reduced water, depending on the assessed pH value of the cation reduced water. In particular, the control element is configured to activate the lye supplying element, if a first pH value assessed by the first pH sensor is below a reference (target) pH value.

In particular, said reference pH value ranges between approximately 6.3 and approximately 6.8, in particular between approximately 6.5 and approximately 6.7.

Therefore, the control element ensures that the specific amount of lye is supplied to the cation reduced water for raising the pH value of the cation reduced water. In particular, the control element activates the lye supplying element to supply lye to the cation reduced water, so that the pH value of the cation reduced water reaches a specific reference pH value. When using a beverage generating apparatus coupled to the water supply, said specific reference pH value of the water supplied to the beverage generating apparatus, ensures that a beverage with optimal qualities is generated.

The beverage generating apparatuses in particular comprise a coffee brewing apparatus or a tea brewing apparatus. Therefore, when the cation reduced water, which is used by the coffee brewing apparatus or a tea brewing apparatus, has a specific pH, which is optimized for coffee or tea extraction, a coffee or tea beverage with optimal quality can be generated and severed to the user.

In particular, since the controller is configured to activate the lye supplying element depending on the assessed pH value of the cation reduced water, during operation of the beverage generating apparatus, fluctuations in pH values of the cation reduced water due to varying cation exchange profiles of the cation exchange element during the operation of the cation exchange element can be counterbalanced.

According to one embodiment, the first pH sensor is fluidically positioned between the cation exchange element and the lye supplying element. Therefore, the first pH sensor is adapted to assess the pH value of the cation reduced water directly after cation exchange before any lye is supplied to the cation reduced water by the lye supplying element. Consequently, the controller can determine the specific amount of lye, which is supplied to the cation reduced water to reach a specific reference pH value of the cation reduced water.

According to one embodiment, the first pH sensor is positioned downstream of the lye supplying element. Therefore, the first pH sensor is adapted to assess the pH value of cation reduced water after lye is supplied to the cation reduced water by the lye supplying element. Consequently, by positioning the first pH sensor downstream of the lye supplying element a specific reference pH value of the cation reduced water can be monitored, so that during the supply of lye to the cation reduced water a too drastic increase in pH value of the cation reduced water can be prevented.

According to one embodiment, the apparatus further comprises a second pH sensor, which positioned downstream of the lye supplying element, wherein the second pH sensor is adapted to assess a second pH value of the cation reduced water, and wherein the controller is configured to activate the lye supplying element for supplying lye to the cation reduced water, depending on the first pH value of the cation reduced water, and/or depending on the assessed second pH value of the cation reduced water.

The second pH sensor, which is positioned downstream of the lye supplying element, in combination with the first pH sensor, which is positioned upstream of the lye supplying element enables to determine two pH values of the cation reduced water at two different fluidic positions in the water supply. The first pH value of the cation reduced water is assessed by the first pH sensor, which is fluidically positioned between the cation exchange element and the lye supplying element. The second pH value of the cation reduced water is assessed by the second pH sensor, which is fluidically positioned between downstream of the lye supplying element. Consequently, the pH value of the cation reduced water can be assessed before and after supplying the lye to the cation reduced water. Therefore, an optimal dosing (metering) of lye is ensured.

In particular, the controller is adapted to employ a feed-back loop to iteratively dose increasing amounts of lye the cation reduced water, when the first pH sensor upstream of the lye supplying element indicates too low pH values, until the second pH sensor downstream of the lye supplying element assesses that the second pH value corresponds to a specific target reference value.

According to one embodiment, the controller is configured to activate the lye supplying element for supplying lye to the cation reduced water depending on the assessed pH value of the cation reduced water, wherein after the activation of the lye supplying element the controller is configured to wait for an equilibration interval, and wherein after the equilibration interval the controller is configured to additionally activate the lye supplying element for supplying additional lye to the cation reduced water, depending on the assessed second pH value of the cation reduced water.

By waiting for the equilibration interval, it can be ensured that a proper mixing of the lye with the cation reduced water in the water supply has been performed, so that a very reliable second pH value of the cation reduced water in the water supply can be assessed by the second pH sensor.

According to one embodiment, the controller is configured to activate the lye supplying element for supplying lye to the cation reduced water, if the first pH value of the cation reduced water assessed by the first pH sensor is below a reference pH value and/or if the second pH value of the cation reduced water assessed by the second pH sensor is below a reference pH value, wherein in particular the controller is configured to deactivate the lye supplying element for stopping the supply of lye to the cation reduced water, if the second pH value of the cation reduced water assessed by the second pH sensor corresponds to the reference pH value.

Therefore, the first pH sensor and the second pH sensor determine a lower and upper limit, respectively, for the pH value of the cation reduced water in the water supply. If the first pH sensor and/or the second pH sensor assess that the pH value upstream and/or downstream of the lye supplying element is below the reference value, the controller is configured to activate the lye supplying element to ensure that lye is added to the cation reduced water. On the other hand, the second pH sensor downstream of the lye supplying element can assess if the second pH value, after addition of the lye to the cation reduced water, reaches the reference pH value indicating and endpoint for the addition of lye, so that an increase of the pH value of the cation reduced water beyond the reference pH value is prevented.

According to one embodiment, the controller is configured to determine the amount of lye to be supplied to the cation reduced water by the lye supplying element based on at least one of the following: the difference between the pH value assessed by the at the least one pH sensor and a reference pH value, and the difference between the first pH value assessed by the first pH sensor and the second pH value assessed by the second pH sensor, wherein the controller is configured to activate the lye supplying element for supplying the determined amount of lye to the cation reduced water.

When determining the specific amount of lye to be supplied to the cation reduced water, the controller can rely on the difference between the first and/or second pH assessed by the first pH sensor and/or the second pH sensor and the reference pH value. If the controller has information of fluidic properties of the lye supplying element and the water supply and has information, i.e. concentration, quantity, of the lye stored in the lye supplying element the controller can determine based on the difference between first pH value and/or second pH value and the reference pH value for how long the lye supplying element has to be activated to provide the specific amount of lye to reach the target reference pH value.

On the other hand, the controller can also consider the difference between the first pH value of the cation reduced water upstream, as determined by the first pH sensor, and the second pH value downstream, as determined by the second pH sensor, to determine the specific amount of lye to be supplied by the lye supplying element.

According to one embodiment, the apparatus further comprises a magnesium supplying element, which is positioned downstream of the cation exchange element, and which is adapted to supply a magnesium ion containing solution to the cation reduced water, wherein the magnesium ion containing solution in particular comprises magnesium sulfate and/or magnesium chloride, wherein the controller is connected to the magnesium supplying element and wherein the controller is configured to activate the magnesium supplying element to supply the magnesium ion containing solution to the cation reduced water.

Since the cation exchange element not only removes calcium but also magnesium from the water conveyed through the water supply, it can be beneficial to replenish the removed magnesium ions by adding a magnesium ion containing solution to the cation reduced water after cation exchange. This is in particular advantageous since magnesium ions present in water generally function as flavor enhancer, in particular enhancing the taste experience of specific beverages, such as coffee and/or tea.

In particular, the controller is configured to activate the magnesium supplying element to supply magnesium ion containing solution to the cation reduced water until a target concentration of magnesium ions in the cation reduced water between 1 ppm and 50 ppm, in particular between 15 ppm and 30 ppm, is reached.

According to one embodiment, the magnesium supplying element is adapted to supply the magnesium ion containing solution fluidically upstream and/or fluidically downstream of the lye supplying element, and/or wherein the magnesium supplying element is adapted to supply the magnesium ion containing solution fluidically between the cation exchange element and the first pH sensor, fluidically between the first pH sensor and the lye supplying element, fluidically between the lye supplying element and the second pH sensor, and/or downstream of the second pH sensor.

Therefore, depending on the mode of operation, the magnesium ion containing solution can be supplied at different fluidic positions to the water supply.

According to one embodiment, the controller is configured to determine the amount of water supplied by the water source, wherein the controller is configured to determine the amount of magnesium ion containing solution to be supplied to the cation reduced water based on the determined amount of water supplied by the water source, and wherein the controller is configured to activate the magnesium supplying element to supply the determined amount of magnesium ion containing solution to the cation reduced water.

Therefore, the amount of supplied magnesium ion containing solution can be adjusted proportionally to the amount of water supplied by the water source.

According to one embodiment, the apparatus further comprises a magnesium detecting element, which is adapted to detect a magnesium ion concentration of the cation reduced water after the cation exchange, wherein the controller is configured to determine the amount of magnesium ion containing solution to be supplied to the cation reduced water by the magnesium supplying element depending on the detected magnesium ion concentration of the cation reduced water, and wherein the controller is configured to activate the magnesium supplying element to supply the determined amount of magnesium ion containing solution to the cation reduced water.

Therefore, by measuring the specific concentration of magnesium ions in the cation reduced water, the controller can determine the specific amount of magnesium ion containing solution, which is necessary to reach the desired target concentration of magnesium ions in the cation reduced water. Preferably, a target concentration of magnesium ions in the cation reduced water ranges between 1 ppm and 50 ppm, in particular ranges between 15 ppm and 30 ppm.

According to one embodiment, the apparatus is fluidically connected to a beverage generating apparatus, in particular a hot beverage generating apparatus, which is adapted to generate a beverage, wherein in particular the apparatus is at least partially positioned within a housing of the beverage generating apparatus, or wherein in particular the apparatus is positioned separate from the beverage generating apparatus.

By fluidically connecting the water supply to the beverage generating apparatus, cation reduced water, which is conveyed through the water supply can be efficiently transferred to the beverage generating apparatus to generate the specific beverage desired by the user. In particular, the beverage generating apparatus is coffee brewing apparatus or a tea brewing apparatus, so that the cation reduced water can be used to generate coffee or tea.

According to a second aspect, the present invention discloses a method for reducing the formation of chalk deposits in a water supply adapted to be coupled with a beverage generating apparatus, comprising the following steps, removing cations from the supplied water by a cation exchange element of a water-hardness reducing apparatus to obtain cation reduced water, assessing a first pH value of the cation reduced water by a first pH sensor of the water-hardness reducing apparatus, and activating a lye supplying element of the water-hardness reducing apparatus for supplying lye to the cation reduced water by a controller depending on the assessed first pH value of the cation reduced water.

Therefore, the amount of lye to be supplied to the cation reduced water in the water supply can be efficiently varied according to the first pH value of the cation reduced water assessed by the first pH sensor.

According to one embodiment, the method comprises the steps of assessing the first and/or second pH value of the cation reduced water by the first pH sensor and/or by a second pH sensor of the water-hardness reducing apparatus downstream of the cation exchange element, and activating the lye supplying element for supplying lye to the cation reduced water by the controller depending on the first pH value and/or the assessed second pH value of the cation reduced water.

Therefore, when employing different sensors for determining different pH values of the cation reduced water in the water supply, a very precise control of the supply of lye to the cation reduced water can be ensured.

According to one embodiment, the method comprises the further step of activating a magnesium supplying element of the water-hardness reducing apparatus, which is positioned downstream of the cation exchange element, by the controller to supply a magnesium ion containing solution to the cation reduced water.

Therefore, by supplying magnesium ions to the cation reduced water, the magnesium concentration of the cation reduced water can be adjusted to the desired optimal concentration range.

### Brief description of the figures

Fig. 1 depicts a pH gradient in water a cation exchange using a cation exchange element with a non-buffered and a buffered cation exchange resin.
Fig. 2 depicts a water-hardness reducing apparatus according to a first embodiment of the present invention.
Fig. 3 depicts a water-hardness reducing apparatus according to a second embodiment of the present invention

### Detailed description of the invention

Fig. 1 depicts a pH value gradient in water after cation exchange using a cation exchange element with a non-buffered and a buffered cation exchange resin.

The first curve 10 depicts a pH value gradient of water after cation exchange using a non-buffered cation exchange resin of a cation exchange element, which is depicted at the y-axis 20, depending on the volume of water in liter conveyed through the non-buffered cation exchange resin, which is depicted at the x-axis 30.

As can derived from the first curve 10, during cation exchange the non-buffered cation exchange resin releases protons in exchange for the bound cations present in the supplied water, thereby reducing the pH value of the cation reduced water after cation exchange. Due to the excessive release of protons by the new and unloaded cation exchange resin at the beginning of the flow of water, the pH value of the cation reduced water initially is about 4.3.

During continuous operation of the cation exchange element more and more cations are bound to the cations exchange resin, thereby reducing the cation binding capacity of the cation exchange element, which consequently leads to a reduced amount of released protons, which results in a linear increase in pH value of the cation reduced water during operation of the cation exchange element.

As can be derived from the first curve 10 of Fig. 1, during operation of the cation exchange element the pH value of the cation reduced water increases until it reaches a saturation volume 50, wherein at the saturation volume 50 the cation exchange resin is saturated at a reference (target) pH value 60 of 6.8.

When reaching the saturation volume, typically the cation exchange element is replaced, or the cation exchange resin is regenerated, since pH values of more than 6.8 do not allow that the chalk carbonic acid equilibrium is shifted sufficiently enough to provide a complete chalk deposit protection in the water supply.

The second curve 40 depicts a pH gradient of water after cation exchange using a buffered cation exchange resin of a cation exchange element, which is depicted at the y-axis 20, depending on the volume of water in liter flowing through the buffered cation exchange resin, which is depicted at the x-axis 30.

In the buffered cation exchange resin the protons adhered to the cation exchange resin have been at least partially replaced by alkaline ions, such as sodium, potassium and/or magnesium ions, so that during cation exchange said alkaline ions are released into the cation reduced water, thereby significantly minimizing the initial drop in pH value to only about 6.8, which is significantly higher than an initial drop in pH value to 4.3, when using a non-buffered cation exchange resin.

During continuous operation of the non-buffered cation exchange element more and more cations are bound to the cations exchange resin, thereby reducing the cation binding capacity of the cation exchange element, which consequently leads to an increase of the pH value during operation as can be derived from the second curve 40, until the reference (target) pH value 60 of 6.8 is reached.

The third curve 70 depicts a constant pH value of about 7.5 of water, which bypasses the cation exchange element, which is depicted at the y-axis 20, depending on the volume of water in liter, which is depicted at the x-axis 30.

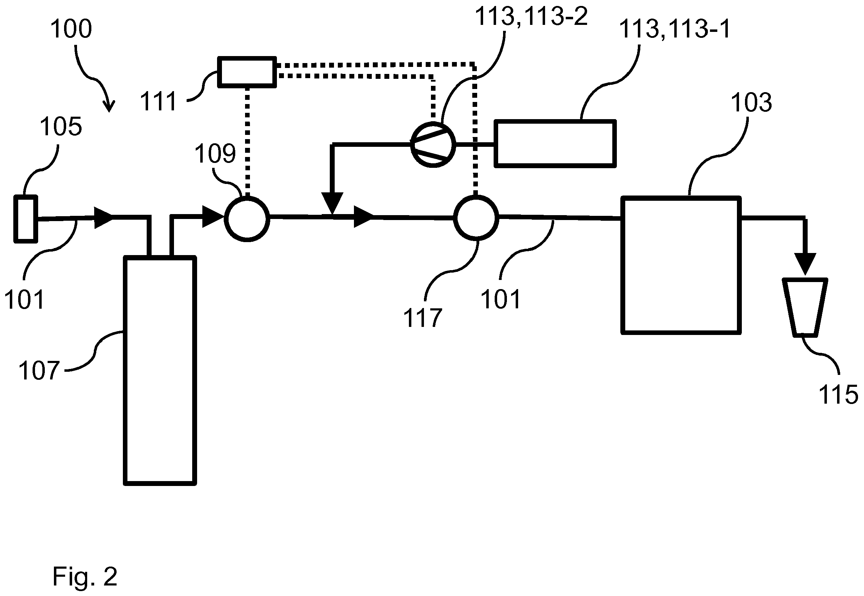

Fig. 2 depicts a water-hardness reducing apparatus according to a first embodiment of the present invention. The water-hardness reducing apparatus 100 is adapted for reducing the formation chalk deposits in a water supply 101 adapted to be coupled with a beverage generating apparatus 103, in particular a coffee brewing apparatus or a tea brewing apparatus.

The water-hardness reducing apparatus 100 comprises a water source 105 of the water supply 101 for supplying water, such as tap water, or a tank filled with tap water. In particular the water source 105 is fluidically connected to a household water connection for providing a constant flow of water, in particular tap water, to the water supply 101.

The water-hardness reducing apparatus 100 further comprises a cation exchange element 107, which is in fluidic connection with the water source 105 of the water supply 101, wherein the cation exchange element 107 is adapted to remove cations, in particular alkaline earth cations, in particular calcium ions and/or magnesium ions, from the supplied water to obtain cation reduced water.

Depending on the regional location of the household water connection, water, in particular tap water, may contain high concentrations of carbonate and calcium ions, which could lead to the formation of chalk deposits in the water supply 101 and/or beverage generating apparatus 103. By providing the cation exchange element 107 cations, in particular calcium ions and/or magnesium ions, can be efficiently removed from the water to provide cation reduced water, thereby reducing the formation of chalk deposits.

In particular, the cation exchange element comprises a strong acidic cation exchange resin, in particular a sulfonic acid-based resin, and/or the cation exchange element comprises a weak acidic cation exchange resin, in particular a carboxylic acid-based resin.

Due to the limited binding capacity of cations, when removing high concentrations of cations, a strong acidic cation exchange resin may be quickly saturated with cations, so that such saturated strong acidic cation exchange resin may have to be regularly regenerated, optionally with a solution of sodium chloride. Preferably, the strong acidic cation exchange resin comprises a pKs of less than 5.

A weak acidic cation exchange resin has an increased cation binding capacity and therefore does not have to be regenerated as often as strong acidic cation exchangers. Preferably, the strong acidic cation exchange resin comprises a pKs of more than 5.

According to an embodiment the strong and/or weak acidic cation exchange resin may be present in a non-buffered state, wherein upon calcium and/or magnesium binding, the non-buffered cation exchange resin releases protons in exchange for the bound calcium and/or magnesium ions.

According to an embodiment the strong and/or weak acidic cation exchange resin may be present in a buffered state, wherein the protons bound by the cation exchange resin have been at least partially replaced by alkaline ions, such as sodium ions and/or potassium ions. Upon calcium ion and/or magnesium ion binding, the buffered cation exchange resin releases the alkaline ions, such as sodium and/or potassium, in exchange for the bound calcium and/or magnesium ions.

The water-hardness reducing apparatus 100 further comprises a first pH sensor 109, which is positioned downstream of the cation exchange element 107, wherein the first pH sensor 109 is adapted to asses a first pH value of the cation reduced water.

Such commonly used cation exchangers may include cation exchange resins in a non-buffered state, wherein upon calcium and/or magnesium binding, the non-buffered cation exchange resin releases protons in exchange for the bound calcium and/or magnesium ions.

A cation exchange element 107, especially if the corresponding resin is present in a non-buffered state, during the cation exchange process releases protons in exchange for the cations, in particular calcium and/or magnesium, bound by the resin. Due to the release of protons and the presence of carbonate in the water, the formation of carbonic acid after cation exchange is increased, which results in a decreased pH value of the cation reduced water after cation exchange. Depending on the amount and type of cation exchange resin to be used, the pH value of the cation reduced water may drop to a pH value of 4.3.

Since the pH value of the cation reduced water can significantly affect the quality of beverage 115 generated by the beverage generating apparatus 103, in particular can affect the extraction process of coffee from grounded coffee beans and/or the extraction process of tea from tea leaves, it is desirable to convey cation reduced water through the water supply 101 to the beverage generating apparatus 103, wherein said cation reduced water has an optimal pH, which does not significantly vary throughout the operation of the cation exchange element 107.

By assessing, in particular measuring, the first pH value of the cation reduced water by the first pH sensor 109 downstream of the cation exchange element 107, a control 111 of the water-hardness reducing apparatus 100, which is connected to the first pH sensor 109 can constantly monitor the pH value of the cation reduced water.

The water-hardness reducing apparatus 100 further comprises a lye supplying element 113, which is positioned downstream of the cation exchange element 107, wherein the lye supplying element 113 is adapted to supply lye to the cation reduced water. In particular, the first pH sensor 109 is fluidically positioned between the cation exchange element 107 and the lye supplying element 113. The lye supplying element 113 comprises a lye container 113-1 for storing lye, in particular sodium hydroxide and/or potassium hydroxide, and comprises a lye pump 113-2, in particular a micro-dosing pump 113-2, for pumping the lye stored in the lye container 113-1 to the cation reduced water, which is conveyed through the water supply 101.

Depending on the typically high concentration of the lye and the limited flow of the water through the water supply 101, which typically ranges between approximately 0.2 I/min and approximately 2.5 I/min, only a minimal volume of lye is dosed to the cation reduced water, which preferably is in the microliter range, therefore requiring a micro-dosing pump (micro-metering pump)113-2.

As can be derived from Fig. 2 the controller 111 is connected to the lye supplying element 113, in particular the lye pump 113-2. The controller 111 is configured to activate the lye supplying element 113 for supplying lye to the cation reduced water, depending on the assessed pH value of the cation reduced water.

Therefore, depending on the extent of drop in pH value of the cation reduced water during cation exchange, by assessing the first pH value of the cation reduced water after cation exchange by the first pH sensor 109, the controller 111 can activate the lye supplying element 113 to supply the amount of lye to the cation reduced water in the water supply 101 to reach an optimal pH value of the cation reduced water, which is optimal for the beverage generating apparatus 103 to generate an optimal beverage 115, in particular an optimal coffee of tea beverage 115.

The water-hardness reducing apparatus 100 further comprises a second pH sensor 117, which is positioned downstream of the lye supplying element 113, wherein the second pH sensor 117 is adapted to assess a second pH value of the cation reduced water. In particular, the second pH sensor 117 is fluidically positioned between the lye supplying element 113 and the beverage generating apparatus 103. The controller 111 is configured to activate the lye supplying element 113 for supplying lye to the cation reduced water, depending on the assessed first pH value of the cation reduced water, and/or depending on the assessed second pH value of the cation reduced water.

However, the second pH sensor 117 is an optional component of the water-hardness reducing apparatus 100, so that in a minimal configuration, the water-hardness reducing apparatus 100 may comprise just the first pH sensor 109. However, according to an additional embodiment of said minimal configuration, the sole first pH sensor 109 may fluidically positioned between the cation exchange element 107 and the lye supplying element 113, thereby assessing the pH value before the lye is supplied to the cation reduced water, or the sole first pH sensor 109 may be fluidically positioned downstream of the lye supplying element 113, thereby assessing the pH value after the lye is supplied to the cation reduced water.

According to the first embodiment, in addition to the first pH sensor 109 a second pH sensor 117 is present in the water-hardness reducing apparatus 100.

In the respective configuration, when determining the activation of the lye supplying element 113, the controller 111 can consider just the first pH value of the cation reduced water assessed by the first pH sensor 109, or the controller 111 can consider just the second pH value of the cation reduced water assessed by the second pH sensor 117. Alternatively, the controller 111 can consider the first pH value assessed by the first pH sensor 109 and the second pH value assessed by the second pH sensor 117.

When activating the lye supplying element 113, and when the controller 111 considers the first pH value assessed by the first pH sensor 109 and the second pH value assessed by the second pH sensor 117, preferably a feed-back loop is generated by the controller 111 to continuously dose the lye to the cation reduced water until a target pH value, i.e., reference pH value, of the cation reduced water is reached.

Preferably, the reference pH value of the ion reduced between ranges between approximately 6.3 to approximately 6.8, and preferably ranges between approximately 6.5 to approximately 6.7.

For example, one criteria for the controller 111 to activate the lye supplying element 113 may be if a first pH value and/or a second pH value of the cation reduced water assessed by the first pH sensor 109 and/or the second pH sensor 117 is below a reference pH value.

For example an additional criteria for the controller 111 to deactivate the lye supplying element 113 for stopping the supply of lye to the cation reduced water may be, if the second pH value of the cation reduced water assessed by the second pH sensor 117 corresponds to a reference pH value. Therefore, when the second pH sensor 117 downstream of the lye supplying element 113 detects that the second pH value of the cation reduced water reaches a target pH value, the controller 111 can stop the supply of lye to the cation reduced water to prevent that the pH value of the cation reduced water surpasses the target pH.

For example, to consider a time lapse before the lye supplied to the cation reduced water reaches the second pH sensor 117, after the activation of the lye supplying element 113 the controller 111 is configured to wait for an equilibration interval, before the controller 111 additionally activate the lye supplying element 113 for supplying additional lye to the cation reduced water, depending on the assessed second pH value of the cation reduced water.

This would allow for an incremental and iterative supply of lye to the cation reduced water, so that the second pH assessed by the second pH sensor 117 downstream of the lye supplying element 113 is increases step-wise towards the target, i.e. reference, pH value, thereby preventing that excess supply of lye thereby specifically limiting the pH value of the cation reduced water to the target pH value.

Preferably, the controller 111 is configured to determine the amount of lye to be supplied to the cation reduced water by the lye supplying element 113 based on at least one of the following: the difference between the pH value assessed by the at the least one pH sensor 109, 117 and a reference pH value, and the difference between the first pH value assessed by the first pH sensor 109 and the second pH value assessed by the second pH sensor 117. After determining the amount of lye to be supplied to the cation reduced water, the controller 111 is configured to activate the lye supplying element 113 for supplying the determined amount of lye to the cation reduced water.

Furthermore, when determining the amount of lye to be supplied, the controller 111 may also consider the pump rate of the lye pump 113-2, diameters and lengths of fluidic connections within the lye supplying element 113, the temperature of the lye, and/or the viscosity of the lye. For example, such information may be stored in a look-up table, which can be accessed by the controller 111.

Therefore, for example depending on the significance of the drop in pH of the cation reduced water after cation exchange compared to the optimal pH desired for beverage generation, the controller 111 can modulate, i.e. increase or decrease, the amount of lye to be supplied to the cation reduced water. This prevents for example that by adding an excess of lye to the cation reduced water a target, i.e. reference, pH of the cation reduced water is surpassed.

Summarizing, the water-hardness reducing apparatus 100 comprises at least one pH sensor 109, 117, which is positioned downstream of the cation exchange element 107 to determine any drop in pH of the cation reduced water after cation exchange. When assessing the pH of the cation reduced water, the controller 111 activates the lye supplying element 113 to supply lye to the cation reduced water depending on the assessed pH of the cation reduced water to increase the pH, thereby counterbalancing the pH reducing effect of the cation exchange element 107.

This in particular allows to use cation exchange elements 107 in the water supply 101 with non-buffered weak acidic cation exchange resin, thereby maximizing the capacity and the operation time of the cation exchange element 107.

Moreover, after supplying lye to the cation reduced water, the cation reduced water comprising an optimal, non-varying, pH for beverage generation is supplied by the water supply 101 to the beverage generating apparatus 103, such as a coffee brewing apparatus or a tea brewing apparatus, such that a beverage 115, i.e. coffee or tea, with optimal beverage quality is generated to be consumed by the user of the beverage generating apparatus 103.

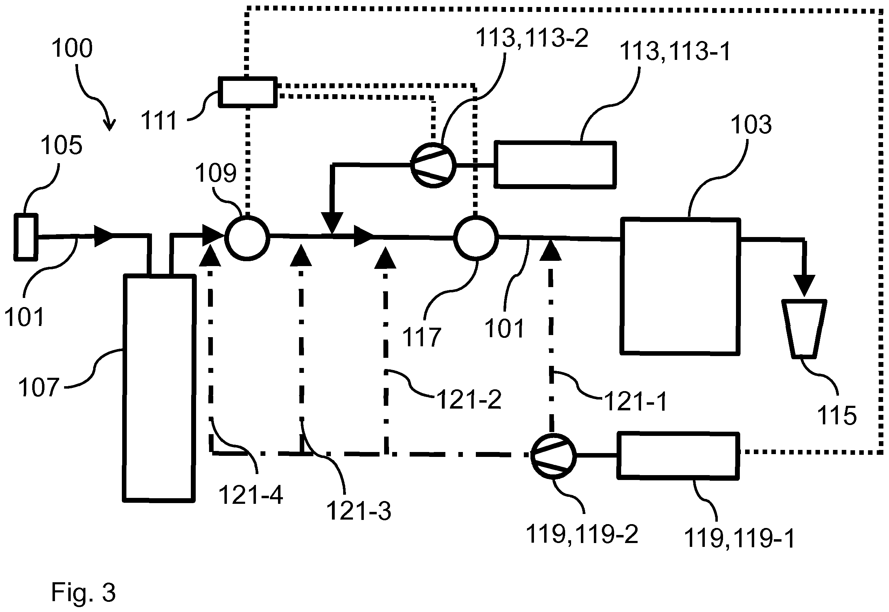

Fig. 3 depicts a water-hardness reducing apparatus according to a second embodiment of the present invention.

The water-hardness reducing apparatus 100 according to the second embodiment depicted in Fig. 3 correspond to the water-hardness reducing apparatus 100 according to the first embodiment depicted in Fig. 2, except that the water-hardness reducing apparatus 100 according to the second embodiment depicted in Fig. 3 comprises a magnesium supplying element 119, which is positioned downstream of the cation exchange element 107, and which is adapted to supply a magnesium ion containing solution to the cation reduced water. In particular, the magnesium ion containing solution comprises magnesium sulfate and/or magnesium chloride.

In this respect, it is mentioned that since calcium carbonate, i.e. chalk, has an approximately 20-times reduced solubility in water compared to magnesium carbonate, it is preferred to reduce the calcium ion concentration of the cation reduced water after cation exchange as much as possible, but is not necessarily required to also reduce the magnesium ion concentration due to the increased solubility of magnesium carbonate.

However, typically used cation exchange elements 107 are not calcium-selective, thereby not only removing calcium ions from the supplied water, but also magnesium ions. It is hereby noted that magnesium ions function as flavor carriers in a variety of beverages 115, in particular coffee or tea, so retaining a certain concentration of magnesium ions in the cation reduced water can be advantageous in respect to obtaining high-quality beverages 115, in particular coffee or tea.

Therefore, the controller 111 of the water-hardness reducing apparatus 100 according to the second embodiment is connected to the magnesium supplying element 119 and the controller 111 is configured to activate the magnesium supplying element 119 to supply the magnesium ion containing solution to the cation reduced water.

Preferably, the magnesium supplying element 119 comprises magnesium solution container 119-1 for storing the magnesium ion containing solution, in particular magnesium sulfate and/or magnesium chloride solution, and comprises a magnesium solution pump 119-2, in particular a micro-dosing pump 119-2 for pumping the magnesium ion containing solution stored in the magnesium solution container 119-1 to the cation reduced water, which is conveyed through the water supply 101.

As depicted in Fig. 3 the magnesium ion containing solution can be supplied to the water supply 101 via four different magnesium supplying pathways 121-1, 121-2, 121-3, 121-4.

According to the first magnesium supplying pathway 121-1, the magnesium supplying element 119 is adapted to supply the magnesium ion containing solution downstream of the second pH sensor 117.

According to the second magnesium supplying pathway 121-2, the magnesium supplying element 119 is adapted to supply the magnesium ion containing solution fluidically between the lye supplying element 113 and the second pH sensor 117.

According to the third magnesium supplying pathway 121-3, the magnesium supplying element 119 is adapted to supply the magnesium ion containing solution fluidically between the first pH sensor 109 and the lye supplying element 113.

According to the fourth magnesium supplying pathway 121-4, the magnesium supplying element 119 is adapted to supply the magnesium ion containing solution fluidically between the cation exchange element 107 and the first pH sensor 109.

Therefore, depending on the specific application of magnesium dosage, one or more of the magnesium supplying pathways 121-,1 121-2, 121-3 and/or 121-4 may be present in the water-hardness reducing apparatus 100.

Preferably, the controller 111 is configured to determine the amount of water supplied by the water source 105, and to determine the amount of magnesium ion containing solution to be supplied to the cation reduced water based on the determined amount of water supplied by the water source 105. Therefore, due to the proportionality of the amount of magnesium ion removed by the cation exchange element 107 and the amount of water, which flows through the cation exchange element 107, the amount of magnesium ions to be supplied to the cation reduced water is based on the determined amount of water. Afterwards, the controller 111 activates the magnesium supplying element 119 so that the determined amount of magnesium ion containing solution can be supplied to the cation reduced water.

As an alternative preferred embodiment the water-hardness reducing apparatus 100 may further comprise a magnesium detecting element, preferably a magnesium-detecting electrode, which is adapted to detect a magnesium ion concentration of the cation reduced water after the cation exchange. In this case the controller 111 is configured to determine the amount of magnesium ion solution to be supplied to the cation reduced water by the magnesium supplying element depending on the detected magnesium ion concentration of the cation reduced water.

In this case the magnesium concentrations are directly determined by the magnesium detecting element after cation exchange, and the controller 111 can very accurately determine the amount of magnesium ion solution to be supplied to the cation reduced water. Afterwards the controller 111 activates the magnesium supplying element 119 to supply the determined amount of magnesium ion containing solution to the cation reduced water.

Preferably, the controller 111 is adapted to activate the magnesium supplying element 119 to supply magnesium ion containing solution to the cation reduced water until a target concentrations of magnesium ions in the cation reduced water between 1 ppm and 50 ppm is reached, preferably between 15 ppm and 20 ppm.

Since a certain amount of magnesium ion in the cation reduced water is considered advantageous for the quality of the beverage 115 to be generated, the cation exchange element 107 may preferably comprise a buffered weak acidic cation exchange resin, wherein a magnesium ion containing buffer is used for buffering. Such magnesium ion buffered weak acidic cation exchange resin binds calcium ions present in the water in exchange for the magnesium ions adhered to the resin, thereby constantly releasing certain amounts of magnesium ions into the cation reduced water during cation exchange.

Since magnesium carbonate is 20-times more soluble than calcium carbonate, such release of magnesium ions is not considered to negatively affect chalk formation, but instead allows for a constant delivery of magnesium ions to the water supply, wherein said magnesium ions function as a flavor enhancer during generation of the beverage 115 by the beverage generating apparatus.

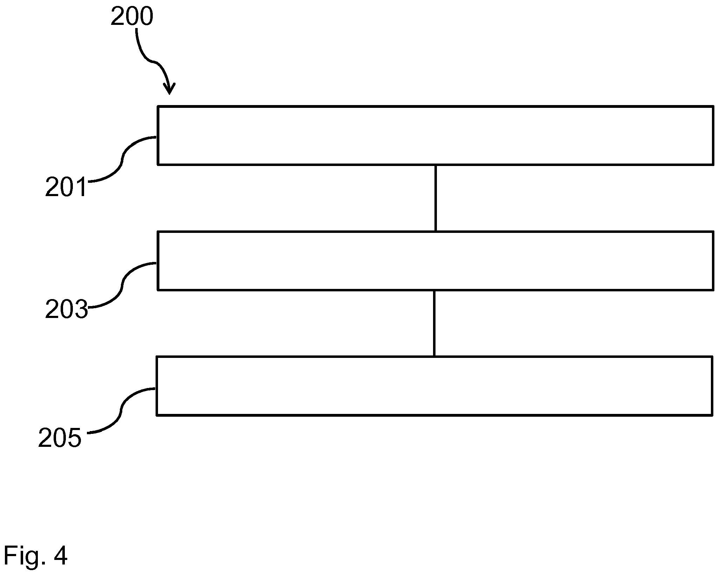

Fig. 4 discloses a method for reducing the formation of chalk deposits in a water supply adapted to be coupled with a beverage generating apparatus.

A first method step 201 comprises removing cations from the supplied water by a cation exchange element 107 of a water-hardness reducing apparatus 100 to obtain cation reduced water.

A second method step 203 comprises assessing a first pH value of the cation reduced water by a first pH sensor 109 of the water-hardness reducing apparatus 100.

A third method step 205 comprises activating a lye supplying element 113 of the water-hardness reducing apparatus 100 for supplying lye to the cation reduced water by a controller 111 depending on the assessed first pH value of the cation reduced water.

### Reference signs

- 10: first curve
- 20: y-axis
- 30: x-axis
- 40: second curve
- 50: saturation value
- 60: reference pH value
- 70: third curve
- 100: water-hardness reducing apparatus
- 101: water supply
- 103: beverage generating apparatus
- 105: water source
- 107: cation exchange element
- 109: first pH sensor
- 111: controller
- 113: lye supplying element
- 113-1: lye container
- 113-2: lye pump
- 115: beverage
- 117: second pH sensor
- 119: magnesium supplying element
- 121-1: First magnesium supplying pathway
- 121-2: Second magnesium supplying pathway
- 121-3: Third magnesium supplying pathway
- 121-4: Fourth magnesium supplying pathway
- 200: Method for reducing the formation of chalk deposits in a water supply
- 201: First method step: Removing cations from the supplied water
- 203: Second method step: Assessing a first pH value of the cation reduced water
- 205: Third method step: Activating a lye supplying element

## Claims

1. Water-hardness reducing apparatus (100) for reducing the formation of chalk deposits in a water supply adapted to be coupled with a beverage generating apparatus (103), comprising:
a cation exchange element (107), which is in fluidic connection with a water source (105), wherein the cation exchange element (107) is adapted to remove cations from the supplied water to obtain cation reduced water;
a first pH sensor (109), which is positioned downstream of the cation exchange element (107), wherein the first pH sensor (109) is adapted to asses a first pH value of the cation reduced water;
a lye supplying element (113), which is positioned downstream of the cation exchange element (107), wherein the lye supplying element (113) is adapted to supply lye to the cation reduced water; and
a controller (111), which is connected to the first pH sensor (109) and to the lye supplying element (113), wherein the controller (111) is configured to activate the lye supplying element (113) for supplying lye to the cation reduced water, depending on the assessed first pH value of the cation reduced water.

2. Apparatus (100) according to claim 1, wherein the first pH sensor (109) is fluidically positioned between the cation exchange element (107) and the lye supplying element (113).

3. Apparatus (100) according to claim 1, wherein the first pH sensor (109) is positioned downstream of the lye supplying element (113).

4. Apparatus (100) according to claim 2, the apparatus (100) further comprising a second pH sensor (117), which positioned downstream of the lye supplying element (113), wherein the second pH sensor (117) is adapted to assess a second pH value of the cation reduced water, and
wherein the controller (111) is configured to activate the lye supplying element (113) for supplying lye to the cation reduced water, depending on the assessed first pH value of the cation reduced water, and/or depending on the assessed second pH value of the cation reduced water.

5. Apparatus (100) according to claim 4, wherein the controller (111) is configured to activate the lye supplying element (113) for supplying lye to the cation reduced water depending on the assessed first pH value of the cation reduced water, wherein after the activation of the lye supplying element (113) the controller (111) is configured to wait for an equilibration interval, and
wherein after the equilibration interval the controller (111) is configured to additionally activate the lye supplying element (113) for supplying additional lye to the cation reduced water, depending on the assessed second pH value of the cation reduced water.

6. Apparatus (100) according to any of one of the preceding claims, wherein the controller (111) is configured to activate the lye supplying element (113) for supplying lye to the cation reduced water, if the first pH value of the cation reduced water assessed by the first pH sensor (109) is below a reference pH value and/or if the second pH value of the cation reduced water assessed by the second pH sensor (117) is below a reference pH value,
wherein in particular the controller (111) is configured to deactivate the lye supplying element (113) for stopping the supply of lye to the cation reduced water, if the second pH value of the cation reduced water assessed by the second pH sensor (117) corresponds to the reference pH value.

7. Apparatus (100) according to any of the preceding claims, wherein the controller (111) is configured to determine the amount of lye to be supplied to the cation reduced water by the lye supplying element (113) based on at least one of the following: the difference between the pH value assessed by the at the least one pH sensor (109, 117) and a reference pH value, and the difference between the first pH value assessed by the first pH sensor (109) and the second pH value assessed by the second pH sensor (117), wherein the controller (111) is configured to activate the lye supplying element (113) for supplying the determined amount of lye to the cation reduced water.

8. Apparatus (100) according to any of the preceding claims, further comprising a magnesium supplying element (119), which is positioned downstream of the cation exchange element (107), and which is adapted to supply a magnesium ion containing solution to the cation reduced water, wherein the magnesium ion containing solution in particular comprises magnesium sulfate and/or magnesium chloride, wherein
the controller (111) is connected to the magnesium supplying element (119) and wherein the controller (111) is configured to activate the magnesium supplying element (119) to supply the magnesium ion containing solution to the cation reduced water.

9. Apparatus (100) according to claim 8, wherein the magnesium supplying element (119) is adapted to supply the magnesium ion containing solution fluidically upstream and/or fluidically downstream of the lye supplying element (113), and/or
wherein the magnesium supplying element (119) is adapted to supply the magnesium ion containing solution fluidically between the cation exchange element (107) and the first pH sensor (109), fluidically between the first pH sensor (109) and the lye supplying element (113), fluidically between the lye supplying element (113) and the second pH sensor (117), and/or downstream of the second pH sensor (117).

10. Apparatus (100) according to claim 8 or 9, wherein the controller (111) is configured to determine the amount of water supplied by the water source (105), wherein the controller (111) is configured to determine the amount of magnesium ion containing solution to be supplied to the cation reduced water based on the determined amount of water supplied by the water source (105), and wherein the controller (111) is configured to activate the magnesium supplying element (119) to supply the determined amount of magnesium ion containing solution to the cation reduced water.

11. Apparatus (100) according to any of the claims 8 to 10, the apparatus (100) further comprising a magnesium detecting element, which is adapted to detect a magnesium ion concentration of the cation reduced water after the cation exchange, wherein the controller (111) is configured to determine the amount of magnesium ion solution to be supplied to the cation reduced water by the magnesium supplying element (119) depending on the detected magnesium ion concentration of the cation reduced water, and wherein the controller (111) is configured to activate the magnesium supplying element (119) to supply the determined amount of magnesium ion containing solution to the cation reduced water.

12. Apparatus (100) according to any of the preceding claims, wherein the apparatus (100) is fluidically connected to a beverage generating apparatus (103), in particular a hot beverage generating apparatus (103), which is adapted to generate a beverage (115), wherein in particular the apparatus (100) is at least partially positioned within a housing of the beverage generating apparatus (103), or wherein in particular the apparatus (100) is positioned separate from the beverage generating apparatus (103).

13. Method (200) for reducing the formation of chalk deposits in a water supply (101) adapted to be coupled with a beverage generating apparatus (103), comprising the following steps:
Removing (201) cations from the supplied water by a cation exchange element (107) of a water-hardness reducing apparatus (100) to obtain cation reduced water, Assessing (203) a first pH value of the cation reduced water by a first pH sensor (109) of the water-hardness reducing apparatus (100), and
Activating (205) a lye supplying element (113) of the water-hardness reducing apparatus (100) for supplying lye to the cation reduced water by a controller (111) depending on the assessed first pH value of the cation reduced water.

14. Method (200) according to claim 13, comprising the steps:
Assessing (203) the first pH value of the cation reduced water by the first pH sensor (109) and by a second pH sensor (117) of the water-hardness reducing apparatus (100) downstream of the cation exchange element (107), and
Activating (205) the lye supplying element (113) for supplying lye to the cation reduced water by the controller (111) depending on the assessed first pH value and/or the assessed second pH value of the cation reduced water.

15. Method (200) according to claim 13 or 14, comprising the further step:
Activating (207) a magnesium supplying element (119) of the water-hardness reducing apparatus (100), which is positioned downstream of the cation exchange element (107), by the controller (111) to supply a magnesium ion containing solution to the cation reduced water.
